# EUROPEAN PATENT SPECIFICATION

(11) **EP 3 123 630 B1**
(45) Date of publication and mention of the grant of the patent: **26.05.2021**
(21) Application number: 15770039.4
(22) Date of filing: 03.03.2015
(51) Int. Cl.: H04W 52/02, H04B 7/24, H04B 17/318, H04W 4/80, H04W 76/25

(54) **METHOD AND APPARATUS FOR CROSS POINT BLUETOOTH COMMUNICATION**
VERFAHREN UND VORRICHTUNG FÜR KREUZUNGSPUNKT-BLUETOOTH-KOMMUNIKATION
PROCÉDÉ ET APPAREIL POUR COMMUNICATION BLUETOOTH À POINT DE CROISEMENT

(30) Priority: 27.03.2014 US 201414227868
(43) Date of publication of application: 01.02.2017
(73) Proprietor: Intel IP Corporation, Santa Clara, CA 95054 (US)
(72) Inventor: WEIZMAN, Raz, Raanana D 43352 (IL); KVETNY, Eddy, 75700 Rishon-Lezion (IL)
(74) Representative: HGF
(86) International application number: PCT/US2015/018490
(87) International publication number: WO 2015/148069

(56) References cited:
- JP-A- 2011 124 804
- US-A1- 2005 162 271
- US-A1- 2012 108 208
- US-A1- 2012 220 351
- US-A1- 2013 260 688
- US-A1- 2013 301 441
- US-B1- 7 809 394

## Description

### BACKGROUND

### Field

The disclosure relates to a method and apparatus for Bluetooth (BT) communication. More specifically, the disclosure relates to a method, system and apparatus for utilizing received signal strength indicator (RSSI) messages to maintain connection between two Bluetooth low energy (BLE) devices.

### Description of Related Art

Bluetooth low energy technology provides connectivity between BT mobile devices and a variety of Bluetooth systems, including, cars, exercise devices, computers, tablets and the like. The BLE technology supports a relatively low power consumption of the BT mobile devices. For example, a BT mobile device may be a small sensor, a watch, or a Smartphone having a battery with limited power supply and the BLE technology may enable the BT mobile device to communicate with the variety of systems using a relatively low power consumption.

According to the BLE technology protocol, a first BT device (the BLE central device) and a second BT device (BLE peripheral device) may establish a connection there-between to enable data exchange. Exchanging data between the BLE central device and the BLE peripheral device at a relatively high rate may increase power consumption of each device and will rapidly deplete battery life.

US20120220351 describes an apparatus, a method and a computer program product for a Bluetooth communication receiver. The Bluetooth communication transceiver is configured as a Bluetooth low energy device performing timing measurements which are to be used for power saving.

US20130301441 describes a system and method for improving signal reception in an access point.

### BRIEF DESCRIPTION OF THE DRAWINGS

The embodiments of the disclosure will be discussed with reference to the following exemplary and non-limiting illustrations, in which like elements are numbered similarly, and where:
Fig. 1 is a schematic diagram illustrating a BT system according to one embodiment of the disclosure;
Fig. 2 is a flow-diagram of a conventional BLE communication;
Fig. 3 is a flow-diagram for an exemplary BLE communication according to one embodiment of the disclosure;
Fig. 4 schematically illustrates an exemplary device for implementing an embodiment of the disclosure;
Fig. 5 is a schematic representation of a system according to one embodiment of the disclosure; and
Fig. 6 is a flow-diagram for implanting an exemplary embodiment of the disclosure.

### DETAILED DESCRIPTION

Certain embodiments may be used in conjunction with various devices and systems, for example, a Personal Computer (PC), a desktop computer, a sensor device, a BT device, a BLE device, an Ultrabook™, a mobile computer, a laptop computer, a notebook computer, a tablet computer, a server computer, a handheld computer, a handheld device, a Personal Digital Assistant (PDA) device, a handheld PDA device, an on board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (AV) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like. Some embodiments may be used in conjunction with devices and/or networks operating in accordance with existing Bluetooth standards ("the BT standards") as will be discussed further below, *e.g*., including BT specification V 1.0, Dec 1, 1991, BT specification V 4.0, June 30, 2010, and/or derivatives thereof.

Some embodiments may be used in conjunction with devices and/or networks operating in accordance with existing Institute of Electrical and Electronics Engineers (IEEE) standards (IEEE 802.11-2012, IEEE Standard for Information technology-Telecommunications and information exchange between systems Local and metropolitan area networks - Specific requirements Part 11: Wireless LAN Medium Access Control (MAC) and Physical Layer (PHY) Specifications, March 29, 2012; IEEE 802.11 task group ac (TGac) ("IEEE 802.11-09/0308r12-TGac Channel Model Addendum Document"); IEEE 802.11 task group ad (TGad) (IEEE P802.11ad-2012, IEEE Standard for Information Technology - Telecommunications and Information Exchange Between Systems - Local and Metropolitan Area Networks - Specific Requirements - Part 11: Wireless LAN Medium Access Control (MAC) and Physical Layer (PHY) Specifications - Amendment 3: Enhancements for Very High Throughput in the 60GHz Band, 28 December, 2012)) and/or derivatives thereof,, devices and/or networks operating in accordance with existing Wireless Fidelity (WiFi) Alliance (WFA) Peer-to-Peer (P2P) specifications (WiFi P2P technical specification, version 1.2, 2012) and/or derivatives thereof, devices and/or networks operating in accordance with existing cellular specifications and/or protocols, *e.g.,* 3rd Generation Partnership Project (3GPP), 3GPP Long Term Evolution (LTE), and/or derivatives thereof, devices and/or networks operating in accordance with existing WirelessHDTM specifications and/or derivatives thereof, units and/or devices which are part of the above networks, and the like.

Some embodiments may be used in conjunction with one way and/or two-way radio communication systems, a BT device, a BLE device, cellular radio-telephone communication systems, a mobile phone, a cellular telephone, a wireless telephone, a P612005 Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, *e.g.,* a Smartphone, a Wireless Application Protocol (WAP) device, or the like. Some demonstrative embodiments may be used in conjunction with a WLAN. Other embodiments may be used in conjunction with any other suitable wireless communication network, for example, a wireless area network, a "piconet", a WPAN, a WVAN and the like.

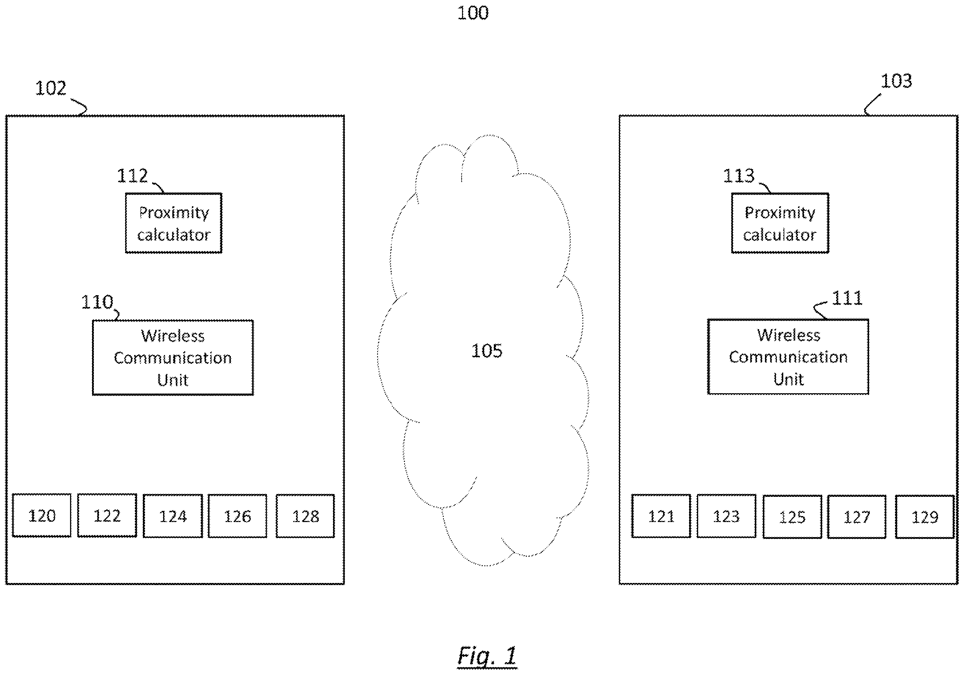

Fig. 1 is a schematic diagram illustrating a BT system according to one embodiment of the disclosure. Specifically, Fig. 1 shows system 100 including wireless communication devices 102, 103 as well as communication medium 105. Communication devices 102, 103 may define BT or BLE communication devices and communication medium 105 may define a BT communication channel. Exemplary embodiments of devices 102 and 103 include a user equipment (UE), a mobile computer, a laptop computer, a notebook computer, a tablet computer, an Ultrabook™ computer, a mobile internet device, a mouse, a handheld computer, a handheld device, a Smartphone, a sensor, a wristwatch, a wrist device, a PDA device, a handheld PDA device, a portable device, a mobile phone, a cellular telephone, a PCS device, a mobile or portable GPS device, a vehicular device or the like.

For the illustration purposes, BLE communication device 102 is shown with proximity calculator 112 and wireless communication unit 110. Similarly, BLE communication device 103 is shown with proximity calculator 113 and wireless communication unit 111. The wireless communication unit may include one or more radios (not shown), including one or more wireless transmitters, receivers and/or transceivers able to send and/or receive wireless communication signals, RF signals, frames, blocks, transmission streams, packets, messages, data items, and/or data. In one example, the radios may include modules and modulation elements, demodulation elements, amplifiers, analog to digital and digital to analog converters, filters, and/or the like. The wireless communication units may include, or may be implemented, as part of a wireless Network Interface Card (NIC).

While not shown, the wireless communication units may include, or may be associated with, one or more antennas for signal transmission and/or reception. Antennas may include any type of antennas suitable for transmitting and/or receiving wireless communication signals, blocks, frames, transmission streams, packets, messages and/or data, including BT signals. In some embodiments, the antennas may implement transmit and receive functionalities using common and/or integrated transmit/receive elements.

BLE communication device 102 includes processor 120, input unit 122, output unit 124, a memory unit 126 and storage unit 128. Similarly, BLE device 103 includes processor 121, input unit 123, output unit 125, memory unit 127 and storage unit 129. BLE communication devices 102 and 103 may optionally include other suitable hardware components and/or software components. For example, the BLE devices may include an independent controller (not shown) in communication with the wireless communication unit, the processor and the memory. Processors 120 and 121 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. For example, the processors may execute instructions of an Operating System (OS) for the BLE communication devices and/or one or more suitable applications.

Memory units 126 and 127 may include a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit or other suitable memory units. Storage units 128 and 129 may include a hard disk drive, a floppy disk drive, a Compact Disk (CD) drive, a CD-ROM drive, a DVD drive, or other non-removable storage units.

Input units 123 and 125 may include a keyboard, a keypad, a mouse, a touch-screen, a touch-pad, a track-ball, a stylus, a microphone, or other suitable pointing device or input device. Output units 124 and 125 may include a monitor, a screen, a touch-screen, a flat panel display, a Cathode Ray Tube (CRT) display unit, a Liquid Crystal Display (LCD) display unit, a plasma display unit, one or more audio speakers or earphones, or other suitable output devices.

BLE communication devices 102 and 103 may perform proximity measurements to determine the distance between them. For example, device 102 may include a wireless display (not shown) and device 103 may define a Smartphone. The wireless display may display content, data, images and/or video from the Smartphone when a distance between the Smartphone and the display is less than a predefined distance (*e.g.,* 3 meters).

Each of the exemplary BLE devices 102 and 103 also includes a proximity calculator 112, 115 configured to determine proximity between devices or between each device and other BT devices. In certain embodiment, the proximity calculator may part of the wireless communication unit. In other embodiments, the proximity calculator may be implemented as a standalone unit as shown.

The proximity calculators 112, 113 may determine the proximity between devices 102 and 103 based on one or more messages (the proximity messages) exchanged between the two devices. For example, device 102 may transmit a first message to device 103 and device 103 may transmit a second message to device 102 responsive to the first message. The first and the second messages may include Attribute Protocol (ATT) messages. The first message may include an ATT Read Request message and the second message may include an ATT Read Response message. The proximity calculator 112 may determine the distance between devices 102 and 103 based on the Read Request message and the Read Response message by measuring the received signal strength (RSSI) of ATT messages.

Proximity calculator 112 may also determine the distance between devices 102 and 103 based on the RSSI of the Read Response message. For example, proximity calculator 112 may determine a power loss of the signal strength of the Read Response message by comparing a signal strength indication of a transmitted power of the Read Response message as transmitted by wireless communication unit 111 and the RSSI of the Read Response message as received at device 102. The proximity calculators may also determine the distance between devices 102 and 103 as a function of the power loss and the predefined power loss per distance. The wireless communication units 110 and 111 may exchange a relatively large number of proximity messages to perform a relatively large number of proximity measurements. The proximity calculators may also perform a large number of proximity measurements to increase accuracy of the determined distance between devices 102 and 103 and/or to track changes during time. Exchanging relatively large number of the proximity messages has been known to increase power consumption of the BLE communication devices.

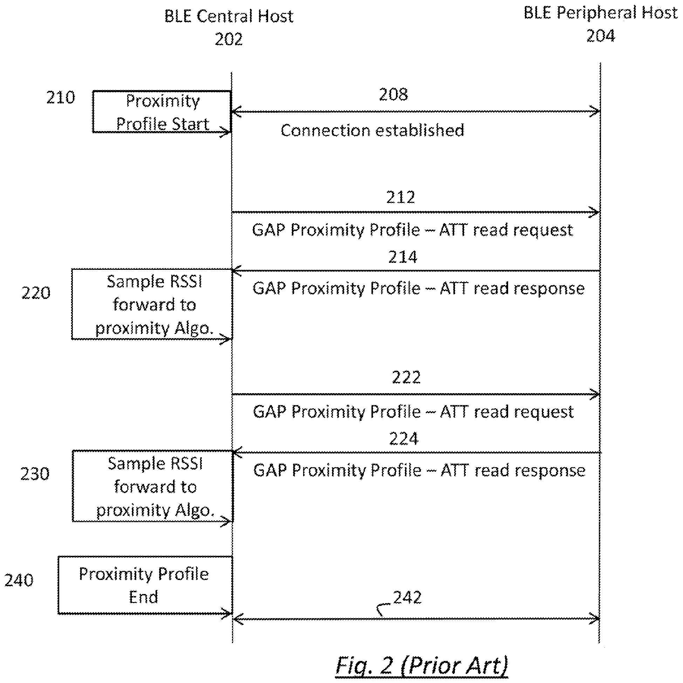

Fig. 2 is a flow-diagram of a conventional BLE communication flow. The flow-diagram of Fig. 2 depicts communication between two BLE devices: the BLE central host 202 and the peripheral host 204. The process begins at step 208 where a connection is established between a BLE Client (Central) and a BLE Server (Peripheral). The connection between the central and peripheral device is conventionally paused during regular intervals (*e.g*., subsequent to establishing connection). The ATT protocol discussed above is used by both devices for data exchange.

As stated, in one embodiment proximity calculation relies on the RSSI values of the exchanged messages. To ensure accuracy of the proximity algorithm, a high number of RSSI measurements at short intervals are be obtained. The process is illustrated in steps 212 through 214. At step 212, client 202 sends an ATT Read Request to server 204. At step 214, server 204 responds by sending an ATT Read Response to client 202. At step 220, client 202 uses the ATT Read Response to obtain an RSSI value and uses the information to run a proximity algorithm to determine the distance between the devices. The process is repeated after a defined pause interval. At step 222, another ATT Read Request is issued by client 202. Server 204 responds with an ATT Read Response at step 224. At step 230, another proximity determination is made. The connectivity process ends at step 242 upon a party's request or when the devices are no longer proximal to each other. The GAP proximity profile is the official profile for proximity between two device in the GAP layer. The profile is only a framework of messages which doesn't define message rate, proximity algorithm or any other implementation details but only the main framework for the standard.

Proximity calculations using RSSI of the exchanged messages requires exchanging a large number of ATT messages at short intervals. Performing ATT transactions by the host software (BT/BLE protocol stack) at such a high rate prevents the host/CPU from entering a low-power state. Consequently, this shortens battery life of the host mobile devices.

Conventionally, data from the BLE host is sent from the software (SW) layer (*e.g.,* ATT data is sent from the SW layer). The SW layer data is processed and transmitted at the link layer (LL) via one or more data packets. In addition to the data packets, the host and the recipient BLE regularly exchange null or empty packets. Each null packet can define a protocol data unit (PDU). Unlike data PDUs, null packets contain no data. The null PDUs are used to maintain connection ad synchronicity between the BLEs. The null PDUs are generated at the LL by device cores (interchangeably, controllers). During the transmission of null PDUs, the host device's SW and its processing hardware are inactive.

According to one embodiment of the disclosure, null PDUs are used for proximity determination. Specifically, the RSSI values for one or more null PDUs are determined and sent to the host for proximity determination. The null PDUs can be used alone or in addition to the GAP proximity profile. The null PDUs can be sent by the controllers of each device and independent of device application(s). Exchanging null PDUs consumes significantly less energy thereby preserving battery life.

In another embodiment, each device's BLE controller is used to buffer the RSSI values associated with the null PDUs so that the host can remain inactive during much of the connection. Once a few null PDUs have been exchanged or a pre-defined duration has lapsed, the BLE controller can activate the host and deliver the buffered RSSI values for proximity range determination. The host (*i.e.,* CPU or application processor) can be at an energy-saving mode while the BLE controller exchanged null PDUs and buffers the RSSI values required proximity determination. The embodiment provides accurate proximity determinations while reducing BLE's power consumption.

In one implementation, the RSSI values associated with null PDUs are aggregated or buffered at the controller and delivered individually or as a batch to the host/application processor. When the proximity detection with the connected device is triggered the host instructs the BLE controller to store data from a specific device (for example, according to the connection access address). The controller may store the RSSI value and timestamp from null PDUs. The controller can activate the application processor and pass the RSSI and timestamp data to the host at regular interval (for example, after every 5-8 null packet exchanges). The host can then process all of the stored RSSI along with their optional timestamp values to calculate device proximity.

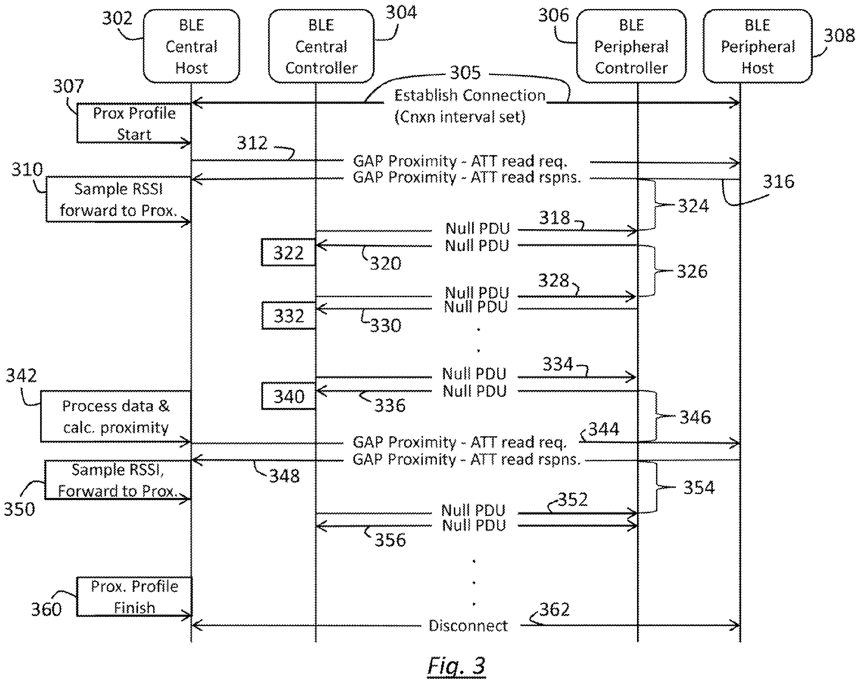

Fig. 3 is a flow-diagram for an exemplary BLE communication according to one embodiment of the disclosure. In the flow-diagram of Fig. 3, BLE central host 302 and BLE central controller 304 are integrated in the same BLE device (*e.g*., BLE client) while BLE peripheral controller 306 and BLE peripheral host 308 reside in the corresponding BLE device (*e.g.,* BLE server). The process starts at step 305 when a connection is established between the client and the server. Conventional means for starting a connection between BT devices can be used. A connection interval parameter is set during the BLE connection establishment step. The connection interval defines the time interval between the exchanges of two consecutive data packets (*e.g*., consecutive ATT Read Requests). High quality proximity measurement requires a relatively small connection interval. A small connection interval results in a very high rate of ATT transactions and a short battery life.

At step 307, the proximity profile determination algorithm starts. The proximity profile determination algorithm resides at the BLE Central Host 302. To determine device proximity, the client issues an ATT Read Request (ATT Read transaction) packet 312 to the server.

On the server side, BLE Peripheral Host 308 receives the Read Request and responds with Read Response 316. As with the Read Request 312, Read Response 316 is prepared by the Attribute protocol application (not shown) at the BLE Peripheral Host 308. The ATT Read transaction and its response are carried over the link layer (LL) (not shown) as PDU packets. At step 310, a sample RSSI value is determined from data packets 312 and 316 and is forwarded to proximity calculator (not shown) for determining device proximity.

After step 310, further data packets are not exchanged for a predetermined interval during which the BLE Central Host 302 and BLE Peripheral Host 308 are inactive. During this period null PDUs are continuously exchanged between devices to maintain connection. Unlike the ATT Read/Response transactions, the null packets do not contain data. The null packets can be exchanged between BLE Central Controller 304 and BLE Peripheral Controller 306 even when the Central Host and the Peripheral Host are inactive.

The null data packet transmission from BLE Central Controller 304 to BLE Peripheral Controller 306 is shown by arrow 318. Time interval 324 denotes the connection time between ATT Response Transaction 316 and receipt of first null packet 318. At step 320, BLE Peripheral Controller 306 responds with a null PDU. Upon receiving null packet 320, BLE Central Controller 304 samples the RSSI value from null packets 318 and 320 and stores the samples locally at a buffer (not shown). Additional time stamps may be stored for each of the sampled RSSIs.

At step 328, a second null packet 328 is transmitted from BLE Central Controller 304 to BLE Peripheral Controller 306. The time interval between transmission of null packet 320 and the receipt of null packet 328 is identified as the connection interval 326. As before, BLE Peripheral Controller 306 responds by sending null packet 330 to BLE Central Controller 304. BLE Central Controller 304 samples the RSSI from null packets 328 and 330 and stores the results at a local buffer (not shown) along with the optional time stamps for the RSSIs.

Exchanging null packet PDUs continues at step 334 with transmission of another null PDU packet from BLE Central Controller 304 to BLE Peripheral Controller 306. The BLE Peripheral Controller responds with null PDU packet 336. At step 340, another sample RSSI value is obtained and locally stored. The BLE Central Host 302 is activated at step 340 and proximity RSSI data gathered at steps 322, 332 and 340 are forwarded thereto. At step 342, BLE Central Host 342 processes the data (with associated time-stamp) and calculates client/server proximity.

Thus, according to one embodiment of the disclosure, while BLE Central Host 302 is inactive during the time interval between 310 and 342, BLE Central Controller 304 and BLE Peripheral Controller 306 continuously exchange messages. These messages are used to determine proximity even when the Hosts are inactive. Using the Controllers consumes significantly less power than running the PDU exchange through the Hosts. It should be noted that while the embodiment of Fig. 3 shows aggregation and buffering of the RSSIs associated with the LL null PDUs, it is well within the disclosed principle to obtain the proximity information from one set of null PDU exchanges.

The null PDUs are not secured since they do not contain a payload. Such PDUs can be easily forged. To maintain secure connection between the BT devices according to one embodiment of the disclosure, the Host periodically issues an ATT Read transactions. The transaction (Read Request/Response) over a secured connection will authenticate and confirm the recipient device. This implementation is shown at step 344 where BLE Central Host 344 sends an ATT Read Request to BLE Peripheral Host 308. BLE Peripheral Host 308 responds by transmitting ATT Read Response 348. At step 350 BLE Central Host 302 determines the RSSI and forwards the results for proximity calculation. This step may be optional if the RSSI values from null PDUs provide sufficient data points. The content of the Read Request/Respond 344/348 can be used to authenticate the server. Proximity calculation can be done at a processor integrated with the BLE Central Host or it can be performed at an independent module (not shown).

The null PDU exchange continues at steps 352 and 356, during which time the Hosts are asleep. Time interval 354 denotes the lag between the GAP proximity determination and resumption of the null PDU exchange.

At step 360, the proximity profile is ended. The ending can come as a result of one or more low RSSI values, indicating distance not suitable for BT connection. Alternatively, one or both devices may terminate the connection independently.

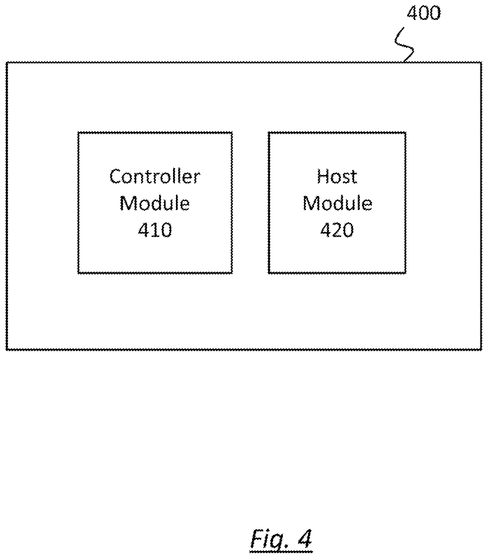

Fig. 4 schematically illustrates an exemplary device for implementing an embodiment of the disclosure. Specifically, Fig. 4 shows device 400 which can be an integral part of a larger system or can be a stand-alone unit. For example, device 400 may be a chipset or a system on chip configured to implement the disclosed methods including establishing and maintaining a BT connection. Device 400 may also be part of a larger system having multiple antennas, a radio and a memory system. Device 400 is shown with Controller module 410 and Host module 420. Modules 410 and 420 can be hardware, software or a combination of hardware and software. Further, each of module 410 and 420 can define one or more independent processor circuits. In an exemplary embodiment, at least one of modules 410 or 420 includes a processor circuit (not shown) and a memory circuit (not shown) to communicate with each other. In another embodiment, modules 410 and 420 define different parts of the same data processing circuit. While not shown, other discrete or independent modules may be added to implement the embodiments disclosed herein.

Device 400 may be interposed between the programmable radio and an antenna to receive the outbound signal from the radio prior to transmission through antenna. Controller module 410 can be configured to receive a plurality of null packets from the periphery device. Module 410 can also be configured to determine an RSSI value for null PDUs. Module 410 may also contain a memory circuit to retain, among other information, the RSSI values and their associated time stamps. The memory circuit (not shown) may be integrated with module 410 or it may be in communication with module 410. Finally, module 410 can direct the stored RSSI values (and optionally associated time stamps) to the second module periodically or after a number of null PDUs have been received.

In an embodiment of the disclosure module 410 can be configured to store up to eight RSSI values determined form eight respective PDUs. In another embodiment module 410 can be configured to store five RSSI values determined form five respective PDUs. In another embodiment, module 410 can be configured to continue exchanging null PDUs for a predefine interval (*e.g*., 10 msec.) before directing the RSSI values obtained during the interval to the Host module.

Host module 420 may be configured to perform functions traditionally relegated to the Host device. For example, module 420 may be configured to receive RSSI data from module 410 and determine whether to maintain BT connection with the periphery device. Module 420 may also be configured to transmit (or caused to be transmitted) an ATT Read transaction request and receive and receive an ATT Read transaction response. Using the Read/Response transaction, module 420 can authenticate the periphery device. If the periphery device is not authenticated, module 420 can terminate, or cause termination of, the BT connection.

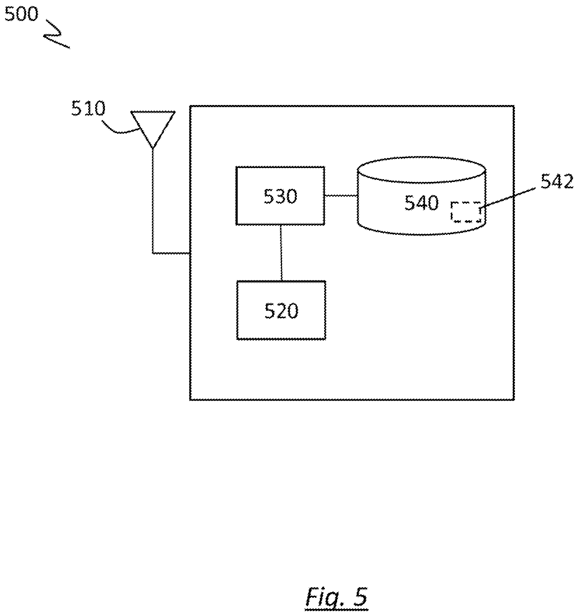

Fig. 5 is a schematic representation of an exemplary system for implementing an embodiment of the disclosure. The step described in any of the flow-diagrams described herein may be implemented in the system of Fig. 5. System 500 of Fig. 5 may define any BT- or BLE-compatible device as discussed above. While system 500 is shown with antenna 510, the disclosure is not limited to having one antenna. Multiple antennas can be added to system 500 such that different signals for different protocols can be received at different antennas. The signal(s) received at antenna 510 can be relayed to radio 520. Radio 520 may include transceiver components such as front-end receiver components or a receiver/transmitter. Radio 520 may receive BT signals for system 500. Although not shown, system 500 may be additionally connected to a WLAN or the internet backbone.

Radio 520 may convert analog signals to a digital data stream and direct the data stream to processor 530. Processor 530 may include one or more modules as discussed in relation to Fig. 4. Processor 530 also communicates with memory circuit 540. While shown as a separate circuitry in the exemplary system of Fig. 5, it should be noted that instructions 542 can be embedded on processor 530 as firmware to obviate the addition of memory circuit 540.

Memory circuit 540 may contain instructions 542 for processor 530 to implement one or more of the steps of the exemplary methods disclosed herein. Memory circuit 540 may define a non-transitory computer readable medium containing a set of instructions for processor 530 to perform a process comprising: (1) receive a plurality of null packets from the periphery device; (2) determine a received signal strength (RSSI) value for each of the respective plurality of received nulled packets; and (3) determine whether to maintain connection with the periphery device as a function of the determined RSSI values. The process may also include instructions to store the plurality of RSSI values at the controller and instructions to authenticate the periphery device by receiving a data packet containing periphery device information. The data packet containing device information may define a Read transaction data packet. Instructions 542 may be programmed directly on processor 530 to obviate memory circuit 540.

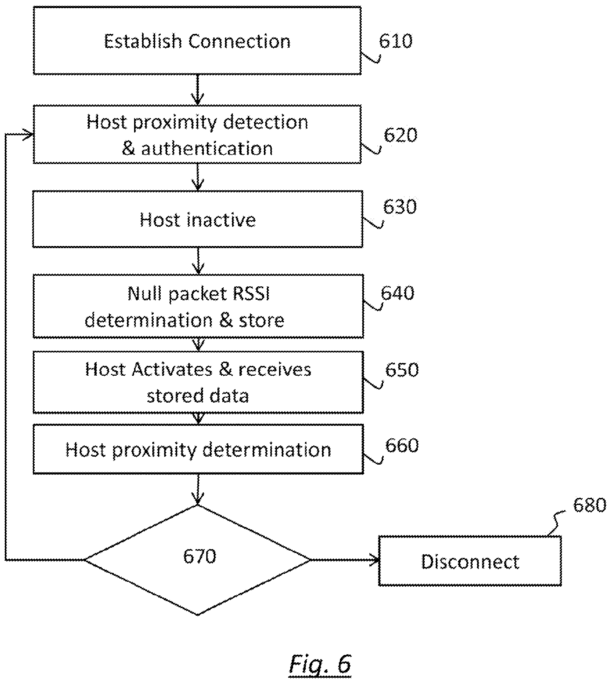

Fig. 6 is a flow-diagram for implanting an exemplary embodiment of the disclosure. The process of Fig. 6 starts at step 610 where the two devices (*e.g*., Host & Peripheral) establish a connection. At step 620, the Host device performs proximity detection algorithm to validate connection to the Peripheral device. The proximity detection of step 620 can be based on the ATT Read/Response transaction. The host may optionally use the ATT Read/Response data packet for authentication. At step 630, the host will be inactive for a given duration. During the inactive period, the Host processor will be asleep thereby not using battery.

At step 640, the Central Controller of the hosting device exchanges one or more null PDUs with the Central Controller of the periphery device and calculates an RSSI value for the null PDUs. The calculated RSSI values can be stored locally at the host's central controller. At step 650, the host processor is activates and receives the stored RSSI values. The host may optionally receive timestamps associated with the RSSI values. At step 660, the host runs the proximity determination algorithm based on the received RSSI values. The proximity determination algorithm may optionally determine whether the periphery device is stationary or moving. If the device is moving away from the Host, at step 670, a determination is made to terminate connection (step 680). Otherwise, the connection is maintained and the routing resumes at step 620.

While the principles of the disclosure have been illustrated in relation to the exemplary embodiments shown herein, the principles of the disclosure are not limited thereto and include any modification, variation or permutation within the scope of the appended claims thereof.

## Claims

1. A method for maintaining a Bluetooth, BT, connection between a host (302) and a periphery device (306, 308), the method comprising:
receiving, at a controller (304) associated with the host (302), a plurality of null packets from the periphery device (306, 308);
determining a received signal strength, RSSI, value for each of the respective plurality of received null packets;
determining whether to maintain the BT connection with the periphery device (306, 308) as a function of the determined RSSI values; and
terminating the BT connection with the periphery device (306, 308) if one or more of the plurality of RSSI values is below a threshold.

2. The method of claim 1, further comprising buffering the plurality of RSSI values at the controller (304).

3. The method of claim 2, further comprising directing the buffered RSSI values to a host device processor for determining whether to maintain the BT connection with the periphery device (306, 308).

4. The method of claim 1, further comprising authenticating the periphery device (306, 308) by receiving a data packet containing device information.

5. The method of claim 4, wherein the data packet defines a Read Response transaction.

6. The method of claim 1, wherein the plurality of null packets defines a group of packets received periodically.

7. The method of claim 1, wherein a first of the null packets is generated from a link layer connectivity application.

8. An apparatus to maintain a Bluetooth, BT, connection between host (302) and a periphery device (306, 308), the apparatus comprising:
a first module (410) configured to receive a plurality of null packets from the periphery device (306, 308) and to determine a received signal strength, RSSI, value for each of the respective plurality of received null packets; and
a second module (420) configured to determine whether to maintain the BT connection as a function of the determined RSSI values
wherein the second module (420) is configured to terminate the BT connection with the periphery device (306, 308) if one or more of the plurality of RSSI values is below a threshold.

9. The apparatus of claim 8, further comprising a memory module configured to store the plurality of RSSI values and a respective time stamp for each RSSI value.

10. The apparatus of claim 8, wherein the second module (420) is further configured to authenticate the periphery device (306, 308) by receiving a data packet containing periphery device information.

11. The apparatus of claim 10, wherein the data packet containing device information defines a Read Response transaction.

12. The apparatus of claim 8, wherein the plurality of null packets defines a group of packets received during a time interval.

13. The apparatus of claim 8, wherein a first of the null packets is generated from a link layer connectivity application.

14. A computer-readable storage device containing a set of instructions to cause a computer to perform a method according to any of claims 1-7.

## Patentansprüche

1. Verfahren zum Aufrechterhalten einer Bluetooth-, BT-, Verbindung zwischen einem Host (302) und einem peripheren Gerät (306, 308), wobei das Verfahren umfasst:
Empfangen, an einer Steuerung (304), die dem Host (302) zugeordnet ist, mehrerer Nullpakete von dem peripheren Gerät (306, 308);
Bestimmen eines Wertes für die empfangene Signalstärke, RSSI, für jedes der jeweiligen mehreren empfangenen Nullpakete;
Bestimmen, ob die BT-Verbindung mit dem peripheren Gerät (306, 308) aufrechterhalten werden soll, in Abhängigkeit von den bestimmten RSSI-Werten; und
Beenden der BT-Verbindung mit dem peripheren Gerät (306, 308), wenn einer oder mehrere der mehreren RSSI-Werte unter einem Schwellenwert liegen.

2. Verfahren nach Anspruch 1, das ferner das Puffern der mehreren RSSI-Werte an der Steuerung (304) umfasst.

3. Verfahren nach Anspruch 2, das ferner das Leiten der gepufferten RSSI-Werte an einen Prozessor des Hostgeräts umfasst, um zu bestimmen, ob die BT-Verbindung mit dem peripheren Gerät (306, 308) aufrechterhalten werden soll.

4. Verfahren nach Anspruch 1, das ferner das Authentifizieren des peripherem Geräts (306, 308) durch Empfangen eines Datenpakets mit Geräteinformationen umfasst.

5. Verfahren nach Anspruch 4, wobei das Datenpaket eine Leseantworttransaktion definiert.

6. Verfahren nach Anspruch 1, wobei die mehreren Nullpakete eine Gruppe von periodisch empfangenen Paketen definieren.

7. Verfahren nach Anspruch 1, wobei ein erstes der Nullpakete von einer Verbindungsschicht-Konnektivitätsanwendung erzeugt wird.

8. Vorrichtung zum Aufrechterhalten einer Bluetooth-, BT-, Verbindung zwischen Host (302) und eines peripheren Geräts (306, 308), wobei die Vorrichtung umfasst:
ein erstes Modul (410), das dazu ausgelegt ist, mehrere Nullpakete von dem peripheren Gerät (306, 308) zu empfangen und einen Wert für die Empfangssignalstärke, RSSI, für jedes der jeweiligen mehreren empfangenen Nullpakete zu bestimmen; und
ein zweites Modul (420), das dazu ausgelegt ist, in Abhängigkeit von den bestimmten RSSI-Werten zu bestimmen, ob die BT-Verbindung aufrechterhalten werden soll wobei das zweite Modul (420) dazu ausgelegt ist, die BT-Verbindung mit dem periphere Gerät (306, 308) zu beenden, wenn einer oder mehrere der mehreren RSSI-Werte unter einem Schwellenwert liegen.

9. Vorrichtung nach Anspruch 8, die ferner ein Speichermodul umfasst, das dazu ausgelegt ist, die mehreren RSSI-Werte und einen jeweiligen Zeitstempel für jeden RSSI-Wert zu speichern.

10. Vorrichtung nach Anspruch 8, wobei das zweite Modul (420) ferner dazu ausgelegt ist, das periphere Gerät (306, 308) durch Empfangen eines Datenpakets zu authentifizieren, das Informationen über das periphere Gerät enthält.

11. Vorrichtung nach Anspruch 10, wobei das Datenpaket, das Geräteinformationen enthält, eine Leseantworttransaktion definiert.

12. Vorrichtung nach Anspruch 8, wobei die mehreren Nullpakete eine Gruppe von während einer Zeitspanne empfangenen Paketen definieren.

13. Vorrichtung nach Anspruch 8, wobei ein erstes der Nullpakete von einer Verbindungsschicht-Konnektivitätsanwendung erzeugt wird.

14. Computerlesbares Speichergerät, das einen Satz von Befehlen enthält, um einen Computer zu veranlassen, ein Verfahren nach einem der Ansprüche 1 - 7 durchzuführen.

## Revendications

1. Procédé pour maintenir une connexion Bluetooth, BT, entre un hôte (302) et un dispositif périphérique (306, 308), le procédé comprenant de :
recevoir, au niveau d'un contrôleur (304) associé à l'hôte (302), une pluralité de paquets nuls à partir du dispositif périphérique (306, 308);
déterminer une valeur d'intensité de signal reçu, RSSI, pour chacun de la pluralité de paquets nuls reçus respectifs;
déterminer s'il faut maintenir la connexion BT avec le dispositif périphérique (306, 308) en fonction des valeurs RSSI déterminées; et
terminer la connexion BT avec le dispositif périphérique (306, 308) si une ou plusieurs de la pluralité de valeurs RSSI est inférieure à un seuil.

2. Procédé de la revendication 1, comprenant en outre de mettre en mémoire tampon la pluralité de valeurs RSSI au niveau du contrôleur (304).

3. Procédé de la revendication 2, comprenant en outre le fait de diriger les valeurs RSSI mises en mémoire tampon vers un processeur de dispositif hôte pour déterminer s'il faut maintenir la connexion BT avec le dispositif périphérique (306, 308).

4. Procédé de la revendication 1, comprenant en outre d'authentifier le dispositif périphérique (306, 308) par la réception d'un paquet de données contenant des informations de dispositif.

5. Procédé de la revendication 4, dans lequel le paquet de données définit une transaction de réponse de lecture.

6. Procédé de la revendication 1, dans lequel la pluralité de paquets nuls définit un groupe de paquets reçus périodiquement.

7. Procédé de la revendication 1, dans lequel un premier des paquets nuls est généré par une application de connectivité de couche de liaison.

8. Appareil pour maintenir une connexion Bluetooth, BT, entre un hôte (302) et un dispositif périphérique (306, 308), l'appareil comprenant :
un premier module (410) configuré pour recevoir une pluralité de paquets nuls à partir du dispositif périphérique (306, 308) et pour déterminer une valeur d'intensité de signal reçu, RSSI, pour chacun de la pluralité de paquets nuls reçus respectifs; et
un second module (420) configuré pour déterminer s'il faut maintenir la connexion BT en fonction des valeurs RSSI déterminées,
dans lequel le second module (420) est configuré pour terminer la connexion BT avec le dispositif périphérique (306, 308) si une ou plusieurs de la pluralité de valeurs RSSI est inférieure à un seuil.

9. Appareil de la revendication 8, comprenant en outre un module de mémoire configuré pour stocker la pluralité de valeurs RSSI et un horodatage respectif pour chaque valeur RSSI.

10. Appareil de la revendication 8, dans lequel le second module (420) est en outre configuré pour authentifier le dispositif périphérique (306, 308) en recevant un paquet de données contenant des informations de dispositif périphérique.

11. Appareil de la revendication 10, dans lequel le paquet de données contenant des informations de dispositif définit une transaction de réponse de lecture.

12. Appareil de la revendication 8, dans lequel la pluralité de paquets nuls définit un groupe de paquets reçus pendant un intervalle de temps.

13. Appareil de la revendication 8, dans lequel un premier des paquets nuls est généré à partir d'une application de connectivité de couche de liaison.

14. Dispositif de stockage lisible par ordinateur contenant un ensemble d'instructions pour amener un ordinateur à exécuter un procédé selon l'une quelconque des revendications 1 à 7.
